(19) Europäisches Patentamt
European Patent Office
Office européen des brevets

(11) EP 1 224 237 B1

(12) EUROPÄISCHE PATENTSCHRIFT

(45) Veröffentlichungstag und Bekanntmachung des Hinweises auf die Patenterteilung:
**01.12.2004 Patentblatt 2004/49**

(21) Anmeldenummer: **00972785.0**

(22) Anmeldetag: **17.10.2000**

(51) Int Cl.[7]: **C08K 5/54**, C08L 55/02, C08L 9/02, C08L 51/04

(86) Internationale Anmeldenummer:
**PCT/EP2000/010200**

(87) Internationale Veröffentlichungsnummer:
**WO 2001/030901 (03.05.2001 Gazette 2001/18)**

(54) **Verwendung von Polyorganosiloxan zur Verminderung des Cold Stress Whitenings**

Use of polyorganosiloxane for reducing cold stress whitening

Utilisation d'un polyorganosiloxane pour la diminution du blanchissement par le froid ("cold stress whitening").

(84) Benannte Vertragsstaaten:
**AT BE CH CY DE DK ES FI FR GB GR IE IT LI LU MC NL PT SE**

(30) Priorität: **27.10.1999 DE 19951648**

(43) Veröffentlichungstag der Anmeldung:
**24.07.2002 Patentblatt 2002/30**

(73) Patentinhaber: **BASF AKTIENGESELLSCHAFT**
**67056 Ludwigshafen (DE)**

(72) Erfinder:
- **OEPEN, Sabine**
**67227 Frankenthal (DE)**
- **NIESSNER, Norbert**
**67159 Friedelsheim (DE)**
- **BREULMANN, Michael**
**68163 Mannheim (DE)**
- **GÜNTHERBERG, Norbert**
**67346 Speyer (DE)**
- **DUIJZINGS, Wil**
**NL-6121 JL Born (NL)**

(56) Entgegenhaltungen:
**GB-A- 1 291 897**
**US-A- 4 248 778**
**US-A- 4 732 924**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die Erfindung betrifft ein Verfahren zur Verminderung von durch tiefe Temperaturen hervorgerufenen unerwünschten Farbtonveränderungen (Cold Stress Whitening) bei schlagzähen thermoplastischen Formmassen F, welche mindestens ein kautschukelastisches Pfropfpolymerisat A und mindestens ein thermoplastisches Polymeres B enthalten, bei dem der schlagzähen thermoplastischen Formmasse F 10 bis 200 ppm, bezogen auf die Formmassen F, mindestens eines Polyorganosiloxans S zugefügt wird. Außerdem betrifft die Erfindung die Verwendung von Polyorganosiloxanen zur Verminderung des Cold Stress Whitening bei schlagzähen thermoplastischen Formmassen F.

Schlagzähe thermoplastische Formmassen auf Basis kautschukelastischer Pfropfpolymerisate und thermoplastischer Matrixpolymeren, wie z.B. ABS (Acrylnitril-Butadien-Styrol), ASA (Acrylnitril-Styrol-Alkylacrylat) und AES (Acrylnitril-EPDM-Styrol, EPDM = Ethylen-Propylen-Dien-Monomer), haben vielfältige Einsatzgebiete aufgrund ihres vorteilhaften Eigenschaftsprofils. Die Formmassen werden üblicherweise als Granulat hergestellt, das dann zu Formteilen weiterverarbeitet wird, beispielsweise durch Spritzgießen oder Extrusion.

Bei der Lagerung und dem Transport des Granulates und der Formteile bei tiefen Temperaturen, insbesondere bei Temperaturen unter -10°C, kann eine unerwünschte Farbtonveränderung auftreten, zumeist sichtbar als Farbtonaufhellung. Dieser Effekt ist als Cold Stress Whitening (nachfolgend CSW) bekannt und bei eingefärbten Granulaten und Formteilen naturgemäß besonders störend, da der mit Farbmitteln eingestellte ursprüngliche Farbton verloren geht. Bei Temperaturen unter -20°C, wie sie bei Transport und Lagerung im Winter und in nordischen Ländern häufig auftreten, ist das Cold Stress Whitening besonders ausgeprägt.

Das CSW wird üblicherweise durch Farbkoordinaten-Messung als Abweichung dE bestimmt. Ein dE-Wert > 3 bedeutet starkes CSW und ist im allgemeinen nicht mehr akzeptabel.

Die EP-A 44 143 offenbart Formmassen aus schlagzähem Polystyrol, denen zur Verminderung des Reibungskoeffizienten bestimmte Organopolysiloxane zugefügt werden. Das CSW wird nicht erwähnt.

Die DE-OS 28 27 594 beschreibt ABS-Formmassen, die 0,05 bis 0,5 Gew.-% eines flüssigen Polymethylphenylsiloxans oder Polydimethylsiloxans und andere Zusatzstoffe enthalten. Dadurch sollen die Kerbschlagzähigkeit und andere mechanische Eigenschaften (Kugeldruckhärte, Vicat-Erweichungstemperatur, Fließfähigkeit) des ABS verbessert werden. Das CSW-Phänomen wird nicht erwähnt.

Research Disclosure 223 020 offenbart die Verwendung eines Siloxanpolymers zur Verbesserung der Bruchdehnung von kautschuk-modifizierten Formmassen, wobei das Siloxanpolymer in einer Menge von 0,01 bis 1 Gew.-% verwendet wird. CSW wird nicht erwähnt.

Die EP-A 177 096 beschreibt ABS-Formmassen, denen zur Verbesserung der Schlagzähigkeit und der Fließeigenschaften 0,1 bis 3 Gew.-% Silikonöl zugesetzt werden. CSW wird nicht erwähnt.

Die DE-A 20 39 022 beschreibt Formmassen aus Butadienkautschuk, Styrol, Methylmethacrylat und Acrylnitril, die 0,01 bis 3 Gew.-% Polyorganosiloxan enthalten, wodurch die Kerbschlagzähigkeit und Transparenz verbessert werden sollen. Auch hier wird CSW nicht erwähnt.

Der Erfindung lag die Aufgabe zugrunde, ein Verfahren bereitzustellen, mit dem schlagzähe thermoplastische Formmassen mit deutlich vermindertem CSW erhältlich sind (dE-Wert ≤ 3). Die Verminderung des CSW sollte nicht mit einer Verschlechterung der sonstigen vorteilhaften Eigenschaften der Formmassen einhergehen. Insbesondere sollte das Verfahren nicht zu einer Verschlechterung der mechanischen Eigenschaften wie Schlagzähigkeit, E-Modul, Bruchdehnung und Fließfähigkeit führen, und auch die verarbeitungseigenschaften (z.B. Entformungsverhalten, Formbelagbildung, Ausschwitzen) der Formmassen sollten sich nicht verschlechtern.

Demgemäß wurde das eingangs definierte Verfahren gefunden. Weiterhin wurde die Verwendung von Polysiloxanen zur Verminderung des CSW bei schlagzähen thermoplastischen Formmassen F gefunden.

Nachfolgend wird das erfindungsgemäße Verfahren näher beschrieben.

Die schlagzähen thermoplastischen Formmassen F enthalten mindestens ein kautschukelastisches Pfropfpolymerisat A. Bevorzugt werden Pfropfpolymerisate A verwendet, die als Kautschuk

- einen Dienkautschuk auf Basis von Dienen, wie z.B. Butadien oder Isopren,
- einen Alkylacrylatkautschuk auf Basis von Alkylestern der Acrylsäure, wie n-Butylacrylat und 2-Ethylhexylacrylat,
- einen EPDM-Kautschuk auf Basis von Ethylen, Propylen und einem Dien,

oder Mischungen dieser Kautschuke bzw. Kautschukmonomeren enthalten.

Bevorzugte Pfropfpolymerisate A enthalten, bezogen auf A),

a1) 30 bis 95, bevorzugt 40 bis 90 und besonders bevorzugt 40 bis 85 Gew.-% einer kautschukelastischen Grundstufe aus, bezogen auf a1)

a11) 50 bis 100, bevorzugt 60 bis 100 und besonders bevorzugt 70 bis 100 Gew.-% eines ($C_1$-$C_{10}$-Alkyl)esters der Acrylsäure,

a12) 0 bis 10, bevorzugt 0 bis 5 und besonders bevorzugt 0 bis 2 Gew.-% eines polyfunktionellen, vernetzenden Monomeren,

a13) 0 bis 40, bevorzugt 0 bis 30 und besonders bevorzugt 0 bis 20 Gew.-% von einem oder mehreren weiteren monoethylenisch ungesättigten Monomeren,

oder aus

a11*) 50 bis 100, bevorzugt 60 bis 100 und besonders bevorzugt 65 bis 100 Gew.-% eines Diens mit konjugierten Doppelbindungen,

a12*) 0 bis 50, bevorzugt 0 bis 40 und besonders bevorzugt 0 bis 35 Gew.-% von einem oder mehreren monoethylenisch ungesättigten Monomeren,

oder aus

a11**) 50 bis 100, bevorzugt 60 bis 100 und besonders bevorzugt 65 bis 100 Gew.-% einer Mischung aus Ethylen, Propylen und einem Dien,

a12**) 0 bis 50, bevorzugt 0 bis 40 und besonders bevorzugt 0 bis 35 Gew.-% von einem oder mehreren weiteren monoethylenisch ungesättigten Monomeren,

a2) 5 bis 70, bevorzugt 10 bis 60 und besonders bevorzugt 15 bis 60 Gew.-% einer Pfropfstufe aus, bezogen auf a2),

a21) 50 bis 100, bevorzugt 60 bis 100 und besonders bevorzugt 65 bis 100 Gew.-% einer Styrolverbindung der allgemeinen Formel

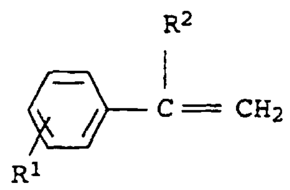

in der $R^1$ und $R^2$ für Wasserstoff oder $C_1$-$C_8$-Alkyl stehen,

a22) 0 bis 40, bevorzugt 0 bis 38 und besonders bevorzugt 0 bis 35 Gew.-% Acrylnitril oder Methacrylnitril oder deren Mischungen,

a23) 0 bis 40, bevorzugt 0 bis 30 und besonders bevorzugt 0 bis 20 Gew.-% von einem oder mehreren weiteren monoethylenisch ungesättigten Monomeren.

Als ($C_1$-$C_{10}$-Alkyl)ester der Acrylsäure, Komponente a11), eignen sich vor allem Ethylacrylat, 2-Ethylhexylacrylat und n-Butylacrylat. Bevorzugt sind 2-Ethylhexylacrylat und n-Butylacrylat, ganz besonders bevorzugt ist n-Butylacrylat. Es können auch Mischungen verschiedener Alkylacrylate verwendet werden, die sich in ihrem Alkylrest unterscheiden.

Vernetzende Monomere a12) sind bi- oder polyfunktionelle Comonomere mit mindestens zwei olefinischen Doppelbindungen, beispielsweise Butadien und Isopren, Divinylester von Dicarbonsäuren wie der Bernsteinsäure und Adipinsäure, Diallyl- und Divinylether bifunktioneller Alkohole wie des Ethylenglycols und des Butan-1,4-diols, Diester der Acrylsäure und Methacrylsäure mit den genannten bifunktionellen Alkoholen, 1,4-Divinylbenzol und Triallylcyanurat. Besonders bevorzugt sind der Acrylsäureester des Tricyclodecenylalkohols (siehe DE-OS 12 60 135), der unter dem Namen Dihydrodicyclopentadienylacrylat bekannt ist, sowie die Allylester der Acrylsäure und der Methacrylsäure.

Vernetzende Monomere a12) können in den Formmassen je nach Art der herzustellenden Formmassen, insbesondere je nach den gewünschten Eigenschaften der Formmassen, enthalten sein oder nicht.

Falls vernetzende Monomere a12) in den Formmassen enthalten sind, so betragen die Mengen 0,01 bis 10, bevorzugt 0,3 bis 8 und besonders bevorzugt 1 bis 5 Gew.-%, bezogen auf a1).

Bei den weiteren monoethylenisch ungesättigten Monomeren a13), die auf Kosten der Monomeren a11) und a12) im Pfropfkern a1) enthalten sein können, handelt es sich beispielsweise um:

vinylaromatische Monomere wie Styrol, Styrolderivate der allgemeinen Formel

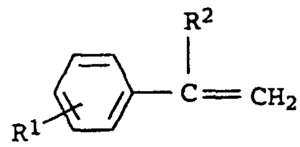

in der $R^1$ und $R^2$ für Wasserstoff oder $C_1$- bis $C_8$-Alkyl stehen;

Acrylnitril, Methacrylnitril;

$C_1$- bis $C_4$-Alkylester der Methacrylsäure wie Methylmethacrylat, weiterhin auch die Glycidylester, Glycidylacrylat und -methacrylat;

N-substituierte Maleinimide wie N-Methyl-, N-Phenyl- und N-Cyclohexylmaleinimid;

Acrylsäure, Methacrylsäure, weiterhin Dicarbonsäuren wie Maleinsäure, Fumarsäure und Itaconsäure sowie deren Anhydride wie Maleinsäureanhydrid;

Stickstoff-funktionelle Monomere wie Dimethylaminoethylacrylat, Diethylaminoethylacrylat, Vinylimidazol, Vinylpyrrolidon, Vinylcaprolactam, Vinylcarbazol, Vinylanilin, Acrylamid und Methacrylamid;

aromatische und araliphatische Ester der Acrylsäure und Methacrylsäure wie Phenylacrylat, Phenylmethacrylat, Benzylacrylat, Benzylmethacrylat, 2-Phenylethylacrylat, 2-Phenylethylmethacrylat, 2-Phenoxyethylacrylat und 2-Phenoxyethylmethacrylat;

ungesättigte Ether wie Vinylmethylether,

sowie Mischungen dieser Monomeren.

Bevorzugte Monomeren a13) sind Styrol, Acrylnitril, Methylmethacrylat, Glycidylacrylat und -methacrylat, Acrylamid und Methacrylamid.

Anstelle der Grundstufen-Monomere a11) bis a13) kann die Grundstufe a1) auch aus den Monomeren a11*) und a12*) aufgebaut sein.

Als Diene mit konjugierten Doppelbindungen, a11*), kommen Butadien, Isopren, Norbornen, und deren halogensubstituierte Derivate, etwa Chloropren, in Betracht. Bevorzugt sind Butadien und Isopren, insbesondere Butadien.

Als weitere monoethylenisch ungesättigte Monomere a12*) können die Monomere mitverwendet werden, wie sie für die Monomeren a13) bereits genannt wurden.

Bevorzugte Monomeren a12*) sind Styrol, Acrylnitril, Methylmethacrylat, Glycidylacrylat und -methacrylat, Acrylamid und Methacrylamid.

Der Pfropfkern a1) kann auch aus einer Mischung der Monomeren a11) bis a13), und a11*) bis a12*), aufgebaut sein.

Anstelle der Grundstufen-Monomere a11) bis a13) bzw. a11*) und a12*) kann die Grundstufe a1) auch aus den Monomeren a11**) und a12**) aufgebaut sein. Als Dien in der Monomermischung a11**), welches in Mischung mit Ethylen und Propylen verwendet wird, sind insbesondere Ethylidennorbornen und Dicyclopentadien geeignet.

Als weitere monoethylenisch ungesättigte Monomere a12**) können die für a13) genannten Monomeren mitverwendet werden.

Der Pfropfkern kann auch aus einer Mischung der Monomeren a11) bis a13) und a11**) bis a12**), oder aus einer Mischung der Monomeren a11*) bis a12*) und a11**) bis a12**), oder aus einer Mischung der Monomeren a11) bis a13), a11*) bis a12*) und a11**) bis a12**), aufgebaut sein.

Enthält der Pfropfkern die Monomeren a11) bis a13), so entstehen nach Abmischung mit einem thermoplastischen Polymerisat B) aus Styrol und Acrylnitril (SAN), sogenannte ASA-Formmassen (Acrylnitril-Styrol-Alkylacrylat). Enthält der Pfropfkern die Monomeren a11*) bis a12*), so entstehen nach Abmischung mit einem thermoplastischen Polymerisat B) aus Styrol und Acrylnitril (SAN) Formmassen vom ABS-Typ (Acrylnitril-Butadien-Styrol). Enthält der Pfropfkern die Monomeren a11**) bis a12**), so entstehen nach Abmischung mit einem thermoplastischen Polymeren B aus Styrol und Acrylnitril (SAN) Formmassen vom AES-Typ (Acrylnitril-EPDM-Styrol). In einer bevorzugten Ausführungsform handelt es sich demnach bei den Polymerisaten A um ASA-Pfropfpolymerisate oder um ABS-Pfropfpolymerisate oder um AES-Pfropfpolymerisate, oder um Mischtypen aus ASA, ABS und AES.

Bezüglich der Monomeren a21) bzw. a23) sei auf die Ausführungen zu den Komponenten b1) bzw. b3) weiter unten verwiesen. Demnach kann die Pfropfschale a2) auf Kosten der Monomere a21) weitere Monomere a22), oder a23), oder deren Mischungen, enthalten. Bevorzugt ist die Pfropfschale a2) aufgebaut aus Polymerisaten, wie sie weiter unten als bevorzugte Ausführungsformen B/1 bis B/4 der Komponente B genannt wurden.

Die Herstellung der Pfropfstufe a2) kann unter den gleichen Bedingungen wie die Herstellung der Grundstufe a1) erfolgen, wobei man die Pfropfstufe a2) in einem oder mehreren Verfahrenschritten herstellen kann. Dabei können die Monomeren a21), a22) und a23) einzeln oder in Mischung miteinander zugefügt werden. Das Monomerenverhältnis der Mischung kann zeitlich konstant oder ein Gradient sein. Auch Kombinationen dieser Verfahrensweisen sind möglich.

Beispielsweise kann man zunächst Styrol alleine, und danach eine Mischung aus Styrol und Acrylnitril, auf die Grundstufe a1) polymerisieren.

Die Bruttozusammensetzung bleibt von den genannten Ausgestaltungen des Verfahrens unberührt.

Weiterhin eignen sich auch Pfropfpolymerisate mit mehreren "weichen" und "harten" Stufen, z.B. des Aufbaus a1)-a2)-a1)-a2) oder a2)-a1)-a2), vor allem im Falle größerer Teilchen.

Soweit bei der Pfropfung nicht gepfropfte Polymere aus den Monomeren a2) entstehen, werden diese Mengen, die in der Regel unter 10 Gew.-% von a2) liegen, der Masse der Komponente A zugeordnet.

Die Herstellung der Pfropfpolymerisate A kann auf verschiedene Weise durchgeführt werden, insbesondere in Emulsion, in Mikroemulsion, in Miniemulsion, in Suspension, in Mikrosuspension, in Minisuspension, als Fällungspolymerisation, in Masse oder in Lösung, kontinuierlich oder diskontinuierlich.

Bei der Emulsionspolymerisation und ihren Varianten (Mikroemulsion, Miniemulsion) werden die Monomeren in Wasser emulgiert, wozu Emulgatoren mitverwendet werden. Die für die Stabilisierung der Emulsion geeigneten Emulgatoren sind seifenartige Hilfsstoffe, welche die Monomerentröpfchen umhüllen und auf diese Weise vor dem Zusammenlaufen schützen.

Als Emulgatoren eignen sich die dem Fachmann bekannten anionischen, kationischen und neutralen (nichtionogenen) Emulgatoren. Anionische Emulgatoren sind z.B. Alkalimetallsalze von höheren Fettsäuren mit 10 bis 30 C-Atomen wie Palmitin-, Stearin- und Ölsäure, Alkalimetallsalze von Sulfonsäuren mit z.B. 10 bis 16 C-Atomen, insbesondere Natriumsalze von Alkyl- oder Alkylarylsulfonsäuren, Alkalimetallsalze von Halbestern der Phthalsäure, und Alkalimetallsalze von Harzsäuren wie Abietinsäure. Kationische Emulgatoren sind z.B. Salze langkettiger, insbesondere ungesättigter Amine mit 12-18 C-Atomen, oder quaternäre Ammoniumverbindungen mit längerkettigen Olefin- oder Paraffinresten (also Salze quaternisierter Fettamine). Neutrale Emulgatoren sind z.B. ethoxylierte Fettalkohole, ethoxylierte Fettsäuren oder ethoxylierte Phenole und Fettsäureester von mehrwertigen Alkoholen wie Pentaerythrit oder Sorbit.

Für die Emulsionspolymerisation werden bevorzugt Initiatoren verwendet, die in dem Monomeren schlecht löslich, in Wasser dagegen gut löslich sind. Es werden daher bevorzugt Peroxosulfate wie Kalium-, Natrium- oder Ammoniumperoxodisulfat verwendet, oder auch Redox-Systeme, insbesondere solche auf Basis von Hydroperoxiden wie Cumolhydroperoxid, Dicumylperoxid, Benzylperoxid oder Laurylperoxid.

Bei der Verwendung von Redox-Systemen werden wasserlösliche Metallverbindungen mitverwendet, deren Metallkationen leicht die Oxidationsstufe wechseln können, z.B. Eisensulfathydrat. Üblicherweise werden auch Komplexbildner wie Natriumpyrophosphat oder Ethylendiamintetraessigsäure mitverwendet, die ein Ausfallen schwerlöslicher Metallverbindungen bei der Polymerisation verhindern. Als Reduktionsmittel bei Redox-Systemen werden in der Regel organische verbindungen wie Dextrose, Glucose und/oder Sulfoxylate verwendet.

Der oder die Initiatoren bzw. das Redox-System können vor oder nach der Herstellung der Emulsion zugegeben werden, oder erst unmittelbar vor Beginn der Polymerisation, oder auch kontinuierlich im Verlauf der Polymerisation nachdosiert werden.

Insbesondere bei Polymerisationen mit einer langen Polymerisationsdauer kann es vorteilhaft sein, den Initiator, als kontinuierlichen Zulauf oder portionsweise, während der Polymerisation zuzugeben. Dabei kann die Dauer des Initiatorzulaufs von der Dauer der Polymerisation verschieden oder gleich sein.

Als weitere Zusatzstoffe können bei der Polymerisation Puffersubstanzen wie $Na_2HPO_4$ / $NaH_2PO_4$ oder Na-citrat/Citronensäure verwendet werden, um einen im wesentlichen konstant bleibenden pH-Wert einzustellen. Weiterhin können Molekulargewichtsregler, etwa Mercaptane wie t-Dodecylmercaptan, oder Ethylhexylthioglycolat mitverwendet werden. Diese weiteren Zusatzstoffe können kontinuierlich oder diskontinuierlich am Anfang und/oder während

der Herstellung der Emulsion und/oder während der Polymerisation, zugefügt werden.

Vorzugsweise stimmt man die Reaktionsbedingungen in an sich bekannter Weise so aufeinander ab, daß die partikelförmigen Pfropfpolymerisate A einen möglichst einheitlichen Durchmesser $d_{50}$ im Bereich von 60 bis 1500, besonders von 150 bis 1000 und ganz besonders 200 bis 700 nm haben.

Anstelle eines einheitlichen Pfropfpolymerisates A) kann man zur Herstellung der erfindungsgemäßen thermoplastischen Massen auch verschiedene dieser Polymerisate verwenden, vor allem solche mit deutlich unterschiedlicher Teilchengröße. Derartige Mischungen mit bimodaler Größenverteilung bieten verfahrenstechnische Vorteile bei der Weiterverarbeitung. Geeignete Teilchendurchmesser liegen im Bereich von 60 bis 200 nm einerseits und 300 bis 1000 nm andererseits. Eine bimodale Teilchengrößenverteilung kann beispielsweise durch partielle Agglomeration, wie sie in DE-AS 2 427 960 beschrieben ist, erzielt werden.

Man nimmt die Emulsionspolymerisationsreaktion in der Regel unter langsamem oder mäßigem Rühren vor.

Die Mikroemulsionspolymerisation unterscheidet sich von der normalen Emulsionspolymerisation vor allem dadurch, daß aus den Monomeren, Wasser und den Emulgatoren eine Emulsion bereitet wird, indem man hohe Scherkräfte einwirken läßt. Dazu verwendet man Homogenisatoren, die dem Fachmann bekannt sind.

Beispielhaft seien genannt:

- Labordissolver Dispermat, Fa. VMA-Getzmann, Reichshof, DE
- Ultra-Turax, Fa. Janke und Kunkel, Staufen, DE
- Druckhomogenisator, Fa. Gaulin, Lübeck, DE
- Geräte mit einem Rotor-Stator-System, etwa
    - Dispax, Fa. Janke und Kunkel, Staufen, DE
    - Cavitron-Homogenisatoren, Fa. v. Hagen & Funke, Sprockhövel, DE
    - Homogenisatoren der Fa. Kotthoff, Essen, DE
    - Homogenisatoren der Fa. Dorr Oliver,Grevenbroich, DE.

Üblicherweise betreibt man diese Geräte bei Drehzahlen von 1000 bis 25 000 $min^{-1}$, bevorzugt 2000 bis 25 000 $min^{-1}$.

Weiterhin können die hohen Scherkräfte ebenso durch

- Einwirkung von Ultraschall,
- Hindurchpressen der Mischung aus Monomeren, Wasser und Schutzkolloiden bzw. Emulgatoren unter hohem Druck durch einen engen Spalt oder durch Düsen kleinen Durchmessers
- Kolloidmühlen

oder andere geeignete Homogenisatoren erzeugt werden.

Die Miniemulsionspolymerisation unterscheidet sich von der normalen Emulsionspolymerisation und der Mikroemulsionspolymerisation vor allem dadurch, daß die Partikelgröße in der Regel zwischen 30-500 mn beträgt (also zwischen den typischen Partikelgrößen der Emulsions- und der Mikroemulsionspolymerisation liegt), und die Partikel üblicherweise durch eine Kombination von ionischen Emulgatoren und Co-Emulgatoren gegen das Zusammenlaufen stabilisiert werden.

Bei der Miniemulsion wird das Gemisch aus Monomeren, Wasser, Emulgatoren und Co-Emulgatoren hohen Scherkräften ausgesetzt, wodurch die Komponenten innig vermischt werden. Anschließend wird polymerisiert. Die hohen Scherkräfte können beispielsweise durch Ultraschall oder durch ein Microfluidizer-Gerät erzeugt werden, wie bei der Mikroemulsion beschrieben. Einzelheiten der Miniemulsion findet der Fachmann in P. Covell, M. El-Asser, Emulsion Polymerization and Emulsion Polymers, Verlag John Wiley, New York, 1997, S. 699-722.

Als Co-Emulgatoren werden solche Verbindungen gewählt, die bewirken, daß die Tröpfchen, die vor dem Starten der Polymerisation gebildet werden, sehr klein aber nicht thermodynamisch stabil sind (siehe Gilbert, "Emulsion Polymerization, A Mechanistic Approach", Academic Press, London San Diego 1995, S. 12-14). Als Co-Emulgatoren werden üblicherweise langkettige Alkane wie Hexadecan oder langkettige Alkohole wie Hexadecanol (Cetylalkohol) oder Dodecanol eingesetzt.

Bei der Suspensionspolymerisation und ihren Varianten (Mikrosuspension, Minisuspension) werden die Monomeren in Wasser suspendiert, wozu Schutzkolloide mitverwendet werden.

Als Schutzkolloide eignen sich Cellulosederivate wie Carboxymethylcellulose und Hydroxymethylcellulose, Poly-N-Vinylpyrrolidon, Polyvinylalkohol und Polyethylenoxid, anionische Polymere wie Polyacrylsäure und deren Copolymere und kationische wie Poly-N-vinylimidazol. Die Menge dieser Schutzkolloide beträgt vorzugsweise 0,1 bis 5 Gew.-%, bezogen auf die Gesamtmasse der Emulsion. Schutzkolloide sowie Verfahren zur Herstellung von Schutzkolloiden sind an sich bekannt und beispielsweise in Encyclopedia of Polymer Science and Engineering, Vol. 16, S.

448, Verlag John Wiley, 1989, beschrieben.

Bevorzugt werden ein oder mehrere Polyvinylalkohole als Schutzkolloid verwendet, insbesondere solche mit einem Hydrolysegrad unter 96 mol-%, besonders bevorzugt 60 bis 94 und ganz besonders bevorzugt 65 bis 92 mol-%. Die bevorzugten Polyvinylalkohole haben eine Viskosität von 2 bis 100 mPa/s, insbesondere von 4 bis 60 mPa/s, gemessen als 4 Gew.-%ige Lösung in Wasser bei 20°C nach DIN 53015.

Man kann zusätzlich zu den Schutzkolloiden kolloidale Kieselsäure in Konzentration von in der Regel 0,2 bis 5 Gew.-%, bezogen auf die Menge der Dispersion, mitverwenden. Näheres zu dieser Methode, die besonders gut mit einem wasserlöslichen Polymeren aus Adipinsäure und Diethanolamin als Schutzkolloid gelingt, ist der US-A 3 615 972 zu entnehmen.

Für die Suspensionspolymerisation sind Initiatoren mit einer Halbwertzeit von einer Stunde, wenn die Temperatur bei 40 bis 150°C liegt, und die in den Monomeren merklich löslich, in Wasser dagegen schlecht löslich sind, bevorzugt.

Es werden daher organische Peroxide, organische Hydroperoxide, Azoverbindungen und/oder Verbindungen mit C-C-Einfachbindungen als Initiatoren RI verwendet. Ebenso werden als radikalische Polymerisationsinitiatoren Monomere verwendet, die bei erhöhter Temperatur spontan polymerisieren. Es können auch Mischungen der genannten Initiatoren RI verwendet werden. Bei den Peroxiden sind diejenigen mit hydrophoben Eigenschaften bevorzugt. Ganz besonders bevorzugt sind Dilaurylperoxid und Dibenzoylperoxid.

Als Azoverbindungen werden 2,2'Azobis(2-methylbutyronitril) und 2,2'-Azobis(isobutyronitril) bevorzugt. Als Verbindungen mit labilen C-C-Bindungen verwendet man bevorzugt 3,4-Dimethyl-3,4-diphenylhexan und 2,3-Dimethyl-2,3-diphenylbutan.

Man nimmt die Polymerisationsreaktion in der Regel unter langsamem oder mäßigem Rühren vor.

Die Mikrosuspensionspolymerisation unterscheidet sich von der normalen Suspensionspolymerisation vor allem dadurch, daß durch Einwirkung hoher Scherkräfte eine feinteilige Suspension bereitet wird. Einzelheiten wurden bereits bei der Mikroemulsionspolymerisation beschrieben.

Die Minisuspensionspolymerisation unterscheidet sich von der normalen Suspensionspolymerisation und der Mikrosuspensionspolymerisation vor allem dadurch, daß die Partikelgrößen in der Regel zwischen denen der Suspensions- und der Mikrosuspensionspolymerisation liegen.

Bei der Fällungspolymerisation sind die eingesetzten Monomere in der kontinuierlichen Phase (z.B. Lösungsmittel oder Lösungsmittelgemisch) löslich, die entstehenden Polymere sind jedoch nicht oder nur begrenzt löslich und fallen daher während der Polymerisation aus. Auch Substanzpolymerisationen, bei denen das entstehende Polymer im Monomer unlöslich ist und daher ausfällt, sind möglich. Je nach Reaktionsmedium sind die bei der Emulsions- bzw. Suspensionspolymerisation beschriebenen Initiatoren möglich. Es kann auch thermisch initiiert werden.

Bei der Massepolymerisation werden die Monomeren ohne Zugabe eines Reaktionsmediums unter Verwendung der genannten monomerlöslichen Initiatoren polymerisiert, d.h. die Monomeren sind das Reaktionsmedium. Es kann auch thermisch initiiert werden.

Die Lösungspolymerisation unterscheidet sich von der Massepolymerisation vor allem dadurch, daß ein organisches Lösungsmittel wie Cyclohexan, Ethylbenzol oder Dimethylsulfoxid oder zur Verdünnung der Monomeren mitverwendet wird. Es können auch die genanten Initiatoren eingesetzt werden, oder es kann thermisch initiiert werden.

Das Verfahren zur Herstellung der Pfropfpolymerisate A kann auch als kombiniertes Verfahren ausgeführt werden, bei dem mindestens zwei der zuvor beschriebenen Polymerisationsverfahren miteinander kombiniert werden. Hier sind insbesondere Masse/Lösung, Lösung/Fällung, Masse/Suspension und Masse/Emulsion zu nennen, wobei mit dem erstgenannten begonnen und mit dem letztgenannten beendet wird.

Weiterhin enthalten die thermoplastischen Formmassen F mindestens ein thermoplastisches Polymerisat B. Bevorzugte Polymerisate B werden erhalten durch Polymerisation eines Monomerengemisches aus, bezogen auf B),

b1) 50 bis 100, bevorzugt 60 bis 95 und besonders bevorzugt 60 bis 90 Gew.-% einer Styrolverbindung der allgemeinen Formel I

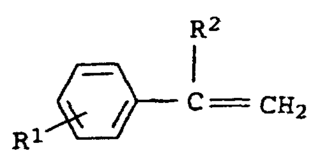

(I)

in der $R^1$ und $R^2$ für Wasserstoff oder $C_1$-$C_8$-Alkyl stehen,
oder eines ($C_1$-$C_8$-Alkyl)esters der Acrylsäure oder Methacrylsäure,
oder Mischungen der Styrolverbindung und des ($C_1$-$C_8$-Alkyl)esters der Acrylsäure oder Methacrylsäure,

b2) 0 bis 40, vorzugsweise 5 bis 38 Gew.-% Acrylnitril oder Methacrylnitril oder deren Mischungen, und

b3) 0 bis 40, vorzugsweise 0 bis 30 Gew.-% von einem oder mehreren weiteren monoethylenisch ungesättigten, von b2) verschiedenen Monomeren.

Bevorzugt hat die Komponente B eine Glasübergangstemperatur Tg von 50°C oder darüber. B ist demnach ein hartes Polymeres.

Als Styrolverbindung der allgemeinen Formel (I) (Komponente b1)) setzt man vorzugsweise Styrol, α-Methylstyrol sowie außerdem mit $C_1$-$C_8$-Alkyl kernalkylierte Styrole wie p-Methylstyrol oder tert.-Butylstyrol, ein. Styrol ist besonders bevorzugt. Es können auch Mischungen der genannten Styrole, insbesondere von Styrol und α-Methylstyrol, verwendet werden.

Anstelle der Styrolverbindungen oder in Mischung mit ihnen kommen $C_1$- bis $C_8$-Alkylester der Acrylsäure und/oder Methacrylsäure in Betracht, besonders solche, die sich vom Methanol, Ethanol, n- und iso-Propanol, sek.-, tert.- und iso-Butanol, Pentanol, Hexanol, Heptanol, Octanol, 2-Ethylhexanol und n-Butanol ableiten. Besonders bevorzugt ist Methylmethacrylat.

Weiterhin kann die Komponente B auf Kosten der Monomeren b1) und b2) ein oder mehrere weitere, monoethylenisch ungesättigte Monomere b3) enthalten, welche die mechanischen und thermischen Eigenschaften von B in einem gewissen Bereich variieren. Als Beispiele für solche Comonomere seien genannt:

N-substituierte Maleinimide wie N-Methyl-, N-Phenyl- und N-Cyclohexylmaleinimid;

Acrylsäure, Methacrylsäure, weiterhin Dicarbonsäuren wie Maleinsäure, Fumarsäure und Itaconsäure sowie deren Anhydride wie Maleinsäureanhydrid;

Stickstoff-funktionelle Monomere wie Dimethylaminoethylacrylat, Diethylaminoethylacrylat, Vinylimidazol, Vinylpyrrolidon, Vinylcaprolactam, Vinylcarbazol, Vinylanilin, Acrylamid und Methacrylamid;

aromatische und araliphatische Ester der Acrylsäure und Methacrylsäure wie Phenylacrylat, Phenylmethacrylat, Benzylacrylat, Benzylmethacrylat, 2-Phenylethylacrylat, 2-Phenylethylmethacrylat, 2-Phenoxyethylacrylat und 2-Phenoxyethylmethacrylat;

ungesättigte Ether wie Vinylmethylether,

sowie Mischungen dieser Monomeren.

Bevorzugte Komponenten B sind beispielsweise Polystyrol, und Copolymere aus Styrol und/oder α-Methylstyrol und einem oder mehreren der unter b1) bis b3) genannten anderen Monomeren. Bevorzugt sind dabei Methylmethacrylat, N-Phenylmaleinimid, Maleinsäureanhydrid und Acrylnitril, besonders bevorzugt Methylmethacrylat und Acrylnitril.

Als Beispiele für bevorzugte Komponenten B seien genannt:

B/1: Polystyrol
B/2: Copolymeres aus Styrol und Acrylnitril,
B/3: Copolymeres aus α-Methylstyrol und Acrylnitril,
B/4: Copolymeres aus Styrol und Methylmethacrylat.

Besonders bevorzugt beträgt der Anteil an Styrol oder α-Methylstyrol, oder der Anteil der Summe aus Styrol und α-Methylstyrol, mindestens 40 Gew.-%, bezogen auf die Komponente B.

Enthält die Komponente B bevorzugt Styrol und Acrylnitril, so entstehen die bekannten handelsüblichen SAN-Copolymeren. Sie haben in der Regel eine Viskositätszahl VZ (ermittelt nach DIN 53 726 bei 25°C, 0,5 Gew.-% in Dimethylformamid) von 40 bis 160 ml/g, entsprechend einer mittleren Molmasse von etwa 40000 bis 2000000 (Gewichtsmittel).

Die Komponente B kann man in an sich bekannter Weise, z.B. durch Substanz-, Lösung- Suspensions-, Fällungs- oder Emulsionspolymerisation erhalten. Einzelheiten dieser Verfahren sind z.B. im Kunststoffhandbuch, Hrg. Vieweg und Daumiller, Carl-Hanser-Verlag München, Bd. 1 (1973), S. 37 bis 42 und Bd. 5 (1969), S. 118 bis 130, sowie in Ullmanns Encyklopädie der technischen Chemie, 4. Aufl., Verlag Chemie Weinheim, Bd. 19, S. 107 bis 158 "Polymerisationstechnik", beschrieben.

Üblicherweise enthalten die schlagzähen thermoplastischen Formmassen F 5 bis 80, bevorzugt 10 bis 70 und besonders bevorzugt 15 bis 60 Gew.-% des kautschukelastischen Pfropfpolymerisates A und entsprechend 20

bis 95, bevorzugt 30 bis 90 und besonders bevorzugt 40 bis 85 Gew.-% des thermoplastischen Polymeren B.

Bei dem erfindungsgemäßen Verfahren wird der Formmasse F mindestens ein Polyorganosiloxan S zugefügt. Als Polyorganosiloxane S sind insbesondere folgende Verbindungsklassen geeignet, die Alkyl-, Aryl- und/oder Vinylreste als Substituenten enthalten, insbesondere: Polymethylphenylsiloxane und Polydimethylsiloxane.

Auch Mischungen dieser Verbindungen sind geeignet.

Polydimethylsiloxane sind bevorzugt. Sie werden üblicherweise durch Angabe ihrer kinematischen Viskosität charakterisiert. Besonders bevorzugt sind Polydimethylsiloxane mit Viskositäten von 10 • $10^{-6}$ bis 100 000 • $10^{-6}$ $m^2$/s (10 bis 100 000 cSt). Ganz besonders bevorzugt sind Polydimethylsiloxane mit Viskositäten von 15 • $10^{-6}$ bis 80 000 • $10^{-6}$ $m^2$/s (15 bis 80 000 cSt). Geeignete Polydimethylsiloxane sind beispielsweise die Handelsprodukte Dow Corning 200 Fluids (Fa. Dow Corning GmbH) und Rhodia Silbione Öle (Rhodia Silicon GmbH). Die immer noch verwendete Einheit Centistokes (cSt) entspricht $10^{-6}$ $m^2$/s in SI-Einheiten.

Es können auch Mischungen verschiedener Polyorganosiloxane verwendet werden.

Erfindungsgemäß wird das Polyorganosiloxan S in einer Menge von 10 bis 200 ppm (parts per million), bezogen auf die Formmasse F, zugefügt. Wird mehr als ein Polyorganosiloxan verwendet, so bezieht sich diese Mengenangabe auf die Gesamtmenge aller n zugefügten Polyorganosiloxane $S_1$, $S_2$, ...$S_n$. Besonders bevorzugt beträgt die (Gesamt)Menge des Polyorganosiloxans 10 bis 190 ppm, bezogen auf die Formmasse F.

Bei der Herstellung von Polymerformmassen wird üblicherweise in einem ersten Schritt das Polymere als Granulat oder Pulver hergestellt. In einem zweiten Schritt wird dann dieses Granulat oder Pulver mit anderen Stoffen, insbesondere weiteren Polymeren und Zusatzstoffen (etwa Farbmittel, Antistatika, Flammschutzmittel, Füllstoffe) unter Aufschmelzen vermischt. Dieser als "Abmischen" oder "Konfektionierung" bezeichnete zweite Schritt wird üblicherweise in einem Kneter, Extruder oder einer anderen Mischvorrichtung vorgenommen. Die so erhaltene Abmischung wird dann in Vorrichtungen zur Herstellung von Formteilen, z.B. Spritzgußmaschinen, Extrudern für Profile, Platten oder Folien, oder Blasformmaschinen, zu Formteilen verarbeitet. Der Begriff Formteile schließt Halbzeuge, Folien, Filme und Schäume ein.

In einer bevorzugten Ausführungsform wird das Polyorganosiloxan S der schlagzähen Formmasse F im oben beschriebenen ersten Schritt, und noch vor der Weiterverarbeitung zu Abmischungen oder Formteilen zugefügt, also noch vor dem Abmischen bzw. Konfektionieren (dem oben beschriebenen zweiten Schritt). In dieser Ausführungsform gibt man das Polyorganosiloxan S üblicherweise vor, während und/oder nach der Polymerisation der Monomeren hinzu.

Besonders bevorzugt wird das Polyorganosiloxan S nach der Polymerisation der Monomeren, aber noch vor der Aufarbeitung des Reaktionsgemisches auf das gewünschte Polymere, zugefügt.

In einer ganz besonders bevorzugten Ausführungsform wird das kautschukelastische Pfropfpolymerisat in wässriger Phase, insbesondere in Emulsion oder in Suspension hergestellt, wobei ein Pfropfkautschuk-Latex entsteht, und das Polyorganosiloxan S wird dem Reaktionsgemisch vor, während und/oder nach der Polymerisation der Monomeren spätestens vor der Koagulation (dem Ausfällen) des Latex zugefügt.

Besonders vorteilhaft ist es dabei, das Polyorganosiloxan S dem Reaktionsgemisch nach der Polymerisation der Monomeren und vor der Koagulation des Latex zuzufügen.

Die Zugabe des Polyorganosiloxans S erfolgt in üblicher Weise durch Vorrichtungen, die dem Fachmann bekannt sind, etwa Dosierpumpen. Die Zugabe kann diskontinuierlich oder kontinuierlich, diskontinuierlich in einer Portion oder in mehreren Portionen, bei kontinuierlicher Zugabe in gleichbleibender, zunehmender oder abnehmender Menge erfolgen, wobei die Zunahme bzw. Abnahme linear, exponentiell oder einer anderen Funktion gehorchend sein kann. auch eine stufenförmige Funktion ist möglich.

Das Polyorganosiloxan S kann unverdünnt oder emulgiert in Wasser zugefügt werden. Insbesondere wenn die Formmasse F eine sehr geringe Menge S enthalten soll, kann die Zugabe als Emulsion vorteilhaft sein, da sie besser dosierbar ist.

Die schlagzähen Formmassen F können neben dem kautschukelastischen Pfropfpolymerisat A, dem thermoplastischen Polymeren B und dem Polyorganosiloxan S weitere Komponenten enthalten, insbesondere weitere Polymere und/oder Zusatzstoffe.

Als weitere Polymere werden bevorzugt Polycarbonate, Polyester, Polyamide, oder deren Mischungen verwendet.

Geeignete Polycarbonate sind an sich bekannt. Sie sind z.B. entsprechend den Verfahren der DE-B-1 300 266 durch Grenzflächenpolykondensation oder gemäß dem Verfahren der DE-A-14 95 730 durch Umsetzung von Biphenylcarbonat mit Bisphenolen erhältlich. Bevorzugtes Bisphenol ist 2,2-Di(4-hydroxyphenyl)propan, im allgemeinen - wie auch im folgenden - als Bisphenol A bezeichnet.

Anstelle von Bisphenol A können auch andere aromatische Dihydroxyverbindungen verwendet werden, insbesondere 2,2-Di(4-hydroxyphenyl)pentan, 2,6-Dihydroxynapthalin, 4,4'-Dihydroxydiphenylsulfon, 4,4'-Dihydroxydiphenylether, 4,4'-Dihydroxydiphenylsulfit, 4,4'-Dihydroxydiphenylmethan, 1,1-Di-(4-hydroxyphenyl)ethan oder 4,4-Dihydroxydiphenyl sowie Mischungen der vorgenannten Dihydroxyverbindungen.

Besonders bevorzugte Polycarbonate sind solche auf der Basis von Bisphenol A oder Bisphenol A zusammen

mit bis zu 30 mol.-% der vorstehend genannten aromatischen Dihydroxyverbindungen.

Die relative Viskosität dieser Polycarbonate liegt im allgemeinen im Bereich von 1,1 bis 1,5, insbesondere 1,28 bis 1,4 (gemessen bei 25°C in einer 0,5 gew.-%igen Lösung in Dichlormethan).

Geeignete Polyester sind ebenfalls an sich bekannt und in der Literatur beschrieben. Sie enthalten einen aromatischen Ring in der Hauptkette, der von einer aromatischen Dicarbonsäure herrührt. Der aromatische Ring kann auch substituiert sein, z.B. durch Halogen wie Chlor und Brom oder durch $C_1$-$C_4$-Alkylgruppen wie Methyl-, Ethyl-, i- bzw. n-Propyl- und n-, i- bzw. tert.-Butylgruppen.

Als besonders bevorzugte Polyester sind Polyalkylenterephthalate, die sich von Alkandiolen mit 2 bis 6 C-Atomen ableiten, zu nennen. Von diesen werden insbesondere Polyethylenterephthalat, Polybutylenterephthalat, Polyethylennaphthalat und Polybutylennaphthalat bevorzugt.

Die viskositätszahl der Polyester liegt im allgemeinen im Bereich von 60 bis 200 ml/g (gemessen in einer 0,5 gew.-%igen Lösung in einem Phenol/o-Dichlorbenzolgemisch (Gew.-Verhältnis 1:1 bei 25°C)).

Bevorzugte Polyamide sind ganz allgemein solche mit aliphatischem teilkristallinen oder teilaromatischem sowie amorphem Aufbau jeglicher Art und deren Blends. Entsprechende Produkte sind z.B. unter dem Handelsnamen Ultramid® von der BASF AG erhältlich.

Außer Polycarbonaten, Polyestern und Polyamiden können als weitere Polymere auch andere Polymere verwendet werden, beispielsweise Polysulfone, Polyethersulfone, Polypropylen, Polyethylen, Polybuten, Polyoxymethylen, und thermoplastische Polyurethane (TPU). Ihr Aufbau und ihre Herstellung sind dem Fachmann bekannt.

Weiterhin können die thermoplastischen Formmassen F Gleit- oder Entformungsmittel, Farbmittel wie z.B. Pigmente oder Farbstoffe, Flammschutzmittel, Antioxidantien, Stabilisatoren gegen Lichteinwirkung, faser- und pulverförmige Füll- oder Verstärkungsmittel oder Antistatika, sowie andere Zusatzstoffe, oder deren Mischungen, enthalten.

Geeignete Gleit- und Entformungsmittel sind z.B. Stearinsäuren, Stearylalkohol, Stearinsäureester oder -amide, Metallstearate, Montanwachse und solche auf Basis von Polyethylen und Polypropylen.

Pigmente sind beispielsweise Titandioxid, Phthalocyanine, Ultramarinblau, Eisenoxide oder Ruß, sowie die Klasse der organischen Pigmente. Unter Farbstoffen sind alle Farbstoffe zu verstehen, die zur transparenten, halbtransparenten oder nichttransparenten Einfärbung von Polymeren verwendet werden können, insbesondere solche, die zur Einfärbung von Styrolcopolymeren geeignet sind. Derartige Farbstoffe sind dem Fachmann bekannt.

Als Flammschutzmittel können z.B. die dem Fachmann bekannten halogenhaltigen oder phosphorhaltigen Verbindungen, Magnesiumhydroxid, sowie andere gebräuchliche Verbindungen, oder deren Mischungen verwendet werden.

Geeignete Antioxidantien (Wärmestabilisatoren) sind etwa sterisch gehinderte Phenole, Hydrochinone, verschiedene substituierte Vertreter dieser Gruppe, sowie deren Mischungen. Sie sind etwa als Topanol® oder Irganox® im Handel erhältlich.

Geeignete Stabilisatoren gegen Lichteinwirkung sind z.B. verschiedene substituierte Resorcine, Salicylate, Benzotriazole, Benzophenone, HALS (Hindered Amine Light Stabilizers), wie sie z.B. als Tinuvin® kommerziell erhältlich sind.

Als Beispiele für faserförmige bzw. pulverförmige Füllstoffe seien Kohlenstoff- oder Glasfasern in.Form von Glasgeweben, Glasmatten oder Glasseidenrovings, Schnittglas, Glaskugeln sowie Wollastonit genannt, besonders bevorzugt Glasfasern. Bei der Verwendung von Glasfasern können diese zur besseren Verträglichkeit mit den Blendkomponenten mit einer Schlichte und einem Haftvermittler ausgerüstet sein. Die Einarbeitung der Glasfasern kann sowohl in Form von Kurzglasfasern als auch in Form von Endlossträngen (Rovings) erfolgen.

Als teilchenförmige Füllstoffe eignen sich Ruß, amorphe Kieselsäure, Magnesiumcarbonat (Kreide), gepulverter Quarz, Glimmer, Mica, Bentonite, Talkum, Feldspat oder insbesondere Calciumsilikate wie Wollastonit und Kaolin.

Geeignete Antistatika sind beispielsweise Aminderivate wie N,N-Bis(hydroxyalkyl)alkylamine oder -alkylenamine, Polyethylenglycolester oder Glycerinmono- und -distearate, sowie deren Mischungen.

Die einzelnen Zusatzstoffe werden in den jeweils üblichen Mengen verwendet, so daß sich nähere Angaben hierzu erübrigen.

Die Herstellung der erfindungsgemäßen Formmassen kann nach an sich bekannten Mischverfahren erfolgen, beispielsweise unter Aufschmelzen in einem Extruder, Banbury-Mischer, Kneter, Walzenstuhl oder Kalander. Die Komponenten können jedoch auch "kalt" verwendet werden und das pulvrige oder aus Granulaten bestehende Gemisch wird erst bei der Verarbeitung aufgeschmolzen und homogenisiert.

Bevorzugt werden die Komponenten, gegebenenfalls mit den erwähnten Zusatzstoffen, in einem Extruder oder einer anderen Mischvorrichtung bei Temperaturen von 100 bis 320°C unter Aufschmelzen vermischt, und ausgetragen. Die Verwendung eines Extruders ist besonders bevorzugt.

Aus den Formmassen lassen sich Formkörper (auch Halbzeuge, Folien, Filme und Schäume) aller Art herstellen. Die Formmassen zeichnen sich durch ein deutlich vermindertes Cold Stress Whitening und zugleich gute

mechanische Eigenschaften und problemlose Verarbeitungseigenschaften aus.

Zu den erwähnten Teilchengrößen seien folgende Erläuterungen angefügt:

Bei der Angabe der gewichtsmittleren Teilchengröße d der Komponente A handelt es sich um das Gewichtsmittel der Teilchengröße, wie sie mittels einer analytischen Ultrazentrifuge entsprechend der Methode von W. Scholtan und H. Lange, Kolloid-Z. und Z.-Polymere 250 (1972) Seiten 782 bis 796, bestimmt wurden. Die Ultrazentrifugenmessung liefert die integrale Massenverteilung des Teilchendurchmessers einer Probe. Hieraus läßt sich entnehmen, wieviel Gewichtsprozent der Teilchen einen Durchmesser gleich oder kleiner einer bestimmten Größe haben.

Der $d_{10}$-Wert gibt denjenigen Teilchendurchmesser an, bei dem 10 Gew.-% aller Teilchen einen kleineren und 90 Gew.-% einen größeren Durchmesser haben. Umgekehrt gilt für den $d_{90}$-Wert, daß 90 Gew.-% aller Teilchen einen kleineren und 10 Gew.-% einen größeren Durchmesser haben als derjenige Durchmesser, der dem $d_{90}$-Wert entspricht. Der gewichtsmittlere Teilchendurchmesser $d_{50}$ bzw. volumenmittlere Teilchendurchmesser $d_{50}$ gibt denjenigen Teilchendurchmesser an, bei dem 50 Gew.-% bzw. Vol.-% aller Teilchen einen größeren und 50 Gew.-% bzw. Vol.-% einen kleineren Teilchendurchmesser aufweisen. $d_{10}$-, $d_{50}$- und $d_{90}$-Wert charakterisieren die Breite Q der Teilchengrößenverteilung, wobei $Q = (d_{90}-d_{10})/d_{50}$. Je kleiner Q ist, desto enger ist die Verteilung.

## Beispiele

Als Polyorganosiloxan S wurde das Polydimethylsiloxan Dow Corning 200 Fluid von Fa. Dow Corning verwendet. Seine Viskosität betrug $350 \cdot 10^{-6}$ $m^2/s$ (≙ 350 cSt).

Herstellung des kautschukelastischen Pfropfpolymerisates A (Kern Polybutadien, Schale Styrol-Acrylnitril-Copolymer):

Eine Mischung von 100 g Butadien, 85 g destilliertem Wasser, 2 g Kaliumrosinat, 1 g Kaliumphosphat, 0,1 g Kaliumhydroxid, 0,2 g tert.-Dodecylmercaptan und 0,3 g Kaliumpersulfat wurden in einem Druckreaktor vorgelegt und 20 Stunden bei 50°C polymerisiert. Die Temperatur wurde anschließend in 5 Stunden mit einer Rate von 5°C/Stunde auf 75°C erhöht. Die gesamt Polymerisationszeit betrug 50 Stunden. Der Umsatz betrug 90 %. Nach Beendigung der Polymerisation wurde das unumgesetzte Butadien durch Dampfdestillation entfernt. Es resultierte ein Polybutadienlatex mit einem Gelgehalt von 75 % und einem durchschnittlichen Partikeldurchmesser von 0,25 Mikrometer.

40 g dieses Polybutadienlatex, bezogen auf den Feststoff, wurden mit 150 g Wasser vermischt. Gegebenenfalls wurde die in Tabelle 1 angegebene Menge des Polydimethylsiloxans zugefügt. Danach wurden 10,75 g Styrol, 4,25 g Acrylnitril und 0,33 g t.-Dodecylmercaptan zugefügt und die Temperatur auf 60°C erhöht. Es wurde eine Mischung aus 0,2 g Natriumpyrophosphat, 0,01 g Eisensulfathydrat und 0,4 g Glucose in 20 g Wasser hinzugefügt. Danach wurden 0,066 g Cumolhydroperoxid zugegeben und die Temperatur eine Stunde auf 70°C gehalten. Danach wurde eine Mischung aus 32,25 g Styrol, 12,75 g Acrylnitril, 0,22 g t.-Dodecylmercaptan und 0,11 g Cumolhydroperoxid kontinuierlich über einen Zeitraum von 3 Stunden zugegeben. Man ließ eine Stunde nachpolymerisieren. Gegebenenfalls wurde die in Tabelle 1 angegebene Menge des Polydimethylsiloxans zugefügt. Der erhaltene Latex hatte einen Feststoffgehalt von 37 %. Er wurde durch Zufügen von Magnesiumsulfatlösung koaguliert. Das ausgefallene Pfropfpolymerisat wurde mit Wasser gewaschen und mit Warmluft getrocknet.

Herstellung der thermoplastischen Polymeren B (Copolymerisat aus Styrol und Acrylnitril):

Es wurden zwei Copolymerisate aus je 67 Gew.-% Styrol und 33 Gew.-% Acrylnitril hergestellt, wie es im Kunststoff-Handbuch, Hrg. R. Vieweg und G. Daumiller, Bd. V "Polystyrol", Carl-Hanser-Verlag München 1969, Seite 122 und 124, beschrieben ist. Die Viskositätszahl des ersten Copolymerisates (ermittelt nach DIN 53 726 bei 25°C, 0,5 Gew.-% in Dimethylformamid) betrug 60 ml/g, diejenige des zweiten Copolymerisates betrug 98 ml/g. Beide Copolymerisate wurden im Verhältnis 4,3 : 1 zusammen mit 0,5 Gew.-Teilen eines Antistatikums, 0,5 Gew.-Teilen Magnesiumstearat und 0,3 Gew.-Teilen eines Stabilisators abgemischt.

Herstellung der schlagzähen Formmassen F und der Probekörper:

Die Komponenten wurden bei 240°C und 250 Upm auf einem Extruder Typ ZSK 30 von Fa. Werner + Pfleiderer unter Aufschmelzen innig vermischt, ausgetragen und granuliert. Aus dem Granulat wurden durch Spritzguß Probekörper hergestellt.

## Bestimmung des Cold Stress Whitening

### a) visuelle Beurteilung

Es wurden 6 Izod-Teststäbe (63 x 12,7 x 6,4 mm) hergestellt. Zwei Stäbe dienten als Referenz. Zwei weitere Stäbe wurden 10 sec. mit Heißluft aus einer Heißluftpistole (Luftaustrittstemperatur 600°C) behandelt, wobei der Abstand der Luftaustrittsöffnung zum Stab 10 cm betrug. Direkt nach der Heißluftbehandlung wurden die beiden Stäbe 2 Stunden bei -20°C in einem Kälteschrank gelagert. Zwei weitere Stäbe wurden in gleicher Weise erhitzt und abgekühlt, jedoch bei -40°C gelagert.

Das Cold Stress Whitening (CSW) wurde als Abweichung des Farbtons der behandelten Stäbe gegenüber der Referenz visuell beurteilt.

b) Messung

Es wurden 6 Hochglanzplatten (60,9 x 60,9 x 3,2 mm) hergestellt. Die Platten wurden markiert und die Farbkoordinaten (L*, a* und b*) nach DIN 5033 bestimmt. Zwei Platten dienten als Referenz. Zwei weitere Platten wurden 1 Stunde in einem Umluftofen bei 90°C gelagert und direkt danach 2 Stunden bei -20°C im Kälteschrank gelagert. Zwei weitere Platten wurden in gleicher Weise erhitzt und abgekühlt, jedoch bei -40°C gelagert. Die Messung der Farbkoordinaten erfolgte unmittelbar nachdem die Proben dem Kälteschrank entnommen wurden.

Das CSW wurde durch Farbkoordinaten-Messung als Abweichung dE bestimmt. Die Abweichung dE wurde wie folgt berechnet:

$$dE = [(L^*_a - L^*_v)^2 + (a^*_a - a^*_v)^2 + (b^*_a - b^*_v)^2]^{1/2}$$

mit Index v = Referenz und Index a = nach Wärme-/Kältebehandlung. Ein dE-Wert von > 3 ist nicht mehr akzeptabel (zu starkes CSW).

Bestimmung der mechanischen Eigenschaften:

Izod-Kerbschlagzähigkeit: an Probekörpern 63,5 x 12,7 x 6,4 mm bei 23°C nach ISO 180/3A

E-Modul und Bruchdehnung: an Probekörpern 150 x 10 x 4 mm bei 23°C durch Zug-Dehnungsversuch nach DIN 53455/3, 50 mm/min, und ISO R 527, 50 mm/min.

MFI Fließfähigkeit: am Granulat bei 220°C und 10 kg Belastung nach ISO 1133.

Der Gehalt an Polydimethylsiloxan ist in den nachfolgendne Tabellen auf die Formmasse bezogen.

Tabelle 1

| Formmasse aus 47 Gew.-Teilen A und 53 Gew.-Teilen B, Bestimmung des CSW nach Methode b) | | | |
|---|---|---|---|
| Beispiel[1)] | Polydimethylsiloxan S [ppm] | CSW als dE, Zugabe von S vor der Polymerisation der Pfropfhülle | CSW als dE, Zugabe von S nach der Polymerisation der Pfropfhülle |
| 1 | 47 | 2,1 | 1,9 |
| 2 | 94 | 2,8 | 1,1 |
| 3 | 141 | 3,0 | 2,5 |
| 4 | 188 | 2,1 | n.b.[2)] |
| 5V | 235 | 4,1 | 3,9 |
| 6V | 282 | 5,1 | n.b.[2)] |

1) V zum Vergleich
2) n.b. nicht bestimmt

Tabelle 1 zeigt, daß die Zugabe des Polydimethylsiloxans nach der Polymerisation der Pfropfhülle (also vor dem Ausfällen) den CSW besonders stark vermindert, verglichen mit der Zugabe vor der Polymerisation der Pfropfhülle. Tabelle 1 zeigt außerdem, daß bei Mengen von S über 200 ppm (nicht erfindungsgemäß) das CSW stark zunimmt: dE-Werte > 3, nicht akzeptables CSW.

Tabelle 2

| Formmasse aus 47 Gew.-Teilen A und 53 Gew.-Teilen B, Bestimmung des CSW nach Methode a), Zugabe des Polydimethylsiloxans nach der Polymerisation der Pfropfhülle von A | | | |
|---|---|---|---|
| Beispiel [1)] | 7V | 8 | 9V |
| Polydimethylsiloxan S [ppm] | 0 | 47 | 282 |
| Izod-Kerbschlagzähigkeit [kJ/m$^2$] | 19,4 | 32,0 | 34,8 |
| E-Modul [N/mm$^2$] | 2188 | 2368 | 2214 |
| Bruchdehnung [%] | 12,1 | 25,3 | 45,2 |
| MFI 10 kg/220°C [g/10 min] | 18,3 | 17,2 | 18,7 |
| CSW | wenig | wenig | stark |

[1)] V zum Vergleich

Wie aus Tabelle 2 hervorgeht, zeigen Formmassen ohne Polydimethylsiloxan zwar wenig CSW, haben jedoch unausgewogene mechanische Eigenschaften, insbesondere eine geringe Kerbschlagzähigkeit und eine geringe Bruchdehnung (Beispiel 7V).

Formmassen, bei denen Herstellung - nicht erfindungsgemäß - Silikonöl in Mengen über 200 ppm verwendet wurde, haben zwar ausgewogene mechanische Eigenschaften, zeigen jedoch ein starkes CSW (Beispiel 9V).

Nur Formmassen, denen erfindungsgemäße Mengen des Silikonöls zugesetzt wurden, zeigen sowohl ausgewogene mechanische Eigenschaften als auch wenig CSW (Beispiel 8).

**Patentansprüche**

1. Verwendung von 10 bis 200 ppm, bezogen auf die Formmasse F, mindestens eines Polyorganosiloxans S zur Verhinderung, dass die durch tiefe Temperaturen hervorgerufene unerwünschten Farbtonveränderungen (Cold Stress Whitening) bei schlagzähen thermoplastischen Formmassen F, die mindestens ein kautschukelastisches Pfropfpolymerisat A und mindestens ein thermoplastisches Polymeres B enthalten, einem Wert dE größes als 3, bestimmt gemäß DIN 5033, aufweisen.

2. Verwendung nach Anspruch 1, **dadurch gekennzeichnet, daß** das Polyorganosiloxan S der schlagzähen thermoplastischen Formmasse F zugefügt wird, bevor die Formmasse F in Mischvorrichtungen oder in Vorrichtungen zur Herstellung von Formteilen weiterverarbeitet wird.

3. Verwendung nach den Ansprüchen 1 bis 2, **dadurch gekennzeichnet, daß** das kautschukelastische Pfropfpolymerisat A in Emulsion oder in Suspension hergestellt wird, wobei ein Kautschuklatex entsteht, und daß das Polyorganosiloxan S dem Reaktionsgemisch spätestens vor der Koagulation des Kautschuklatex zugefügt wird.

4. Verwendung nach den Ansprüchen 1 bis 3, **dadurch gekennzeichnet, daß** das Polyorganosiloxan S in einer Menge von 10 bis 190 ppm, bezogen auf die Formmasse F, zugefügt wird.

5. Verwendung nach den Ansprüchen 1 bis 4, **dadurch gekennzeichnet, daß** das Polyorganosiloxan S ein Polydimethylsiloxan mit einer Viskosität von $10 \cdot 10^{-6}$ bis $100\,000 \cdot 10^{-6}$ $m^2/s$ ist.

6. Verwendung nach den Ansprüchen 1 bis 5, **dadurch gekennzeichnet, daß** das kautschukelastische Pfropfpolymerisat A als Kautschuk,einen Dienkautschuk, Alkylacrylatkautschuk oder EPDM-Kautschuk enthält.

7. Verwendung nach den Ansprüchen 1 bis 6, **dadurch gekennzeichnet, daß** das thermoplastische Polymerisat B Styrol und/oder $\alpha$-Methylstyrol, und Acrylnitril enthält.

8. Verwendung nach den Ansprüchen 1 bis 7, **dadurch gekennzeichnet, daß** die schlagzähe Formmasse F eine ABS-Formmasse ist.

## Claims

1. The use of from 10 to 200 ppm, based on the molding composition F, of at least one polyorganosiloxane S to ensure that the undesirable changes in shade brought about by low temperatures (Cold Stress Whitening) in impact-modified thermoplastic molding compositions F which comprise at least one elastomeric graft polymer A and at least one thermoplastic polymer B do not generate a dE value greater than 3, determined to DIN 5033.

2. The use as claimed in claim 1, wherein the polyorganosiloxane S is added to the impact-modified thermoplastic molding composition F before the molding composition F is further processed in mixing apparatuses or in apparatuses for producing moldings.

3. The use as claimed in claim 1 or 2, wherein the elastomeric graft polymer A is prepared in emulsion or in suspension, in which process a rubber latex is produced, and wherein a polyorganosiloxane S is added to the reaction mixture at the latest prior to the coagulation of the rubber latex.

4. The use as claimed in any of claims 1 to 3, wherein the amount of the polyorganosiloxane S added is from 10 to 190 ppm, based on the molding composition F.

5. The use as claimed in any of claims 1 to 4, wherein the polyorganosiloxane S is a polydimethylsiloxane with a viscosity of from $10 \cdot 10^{-6}$ to $100\,000 \cdot 10^{-6}$ $m^2/s$.

6. The use as claimed in any of claims 1 to 5, wherein the rubber present in the elastomeric graft polymer A comprises a diene rubber, alkyl acrylate rubber or EPDM rubber.

7. The use as claimed in any of claims 1 to 6, wherein the thermoplastic polymer B comprises styrene and/or α-methylstyrene, and acrylonitrile.

8. The use as claimed in any of claims 1 to 7, wherein the impact-modified molding composition F is an ABS molding composition.

## Revendications

1. Utilisation de 10 à 200 ppm, par rapport à la masse de moulage F, d'au moins un polyorganosiloxane S pour diminuer les altérations de couleurs indésirables provoquées par de basses températures (blanchissement par le froid, Cold Stress Whitening) de masses de moulage thermoplastiques résistantes au choc F, présentant au moins un polymère greffé A à élasticité de caoutchouc et au moins un polymère thermoplastique B, présentant une valeur dE de plus de 3, déterminée selon DIN 5033.

2. Utilisation selon la revendication 1, **caractérisée en ce que** le polyorganosiloxane S est ajouté à la masse de moulage thermoplastique résistante au choc avant que la masse de moulage F soit retravaillée dans des dispositifs de mélange ou dans des dispositifs pour la production de pièces moulées.

3. Utilisation selon les revendications 1 à 2, **caractérisée en ce que** le polymère greffé à élasticité de caoutchouc A est préparé en émulsion ou en suspension, et que le polyorganosiloxane S est ajouté au mélange réactionnel au plus tard avant la coagulation du latex de caoutchouc.

4. Utilisation selon les revendications 1 à 3, **caractérisée en ce que** le polyorganosiloxane S est ajouté en une quantité de 10 à 190 ppm, par rapport à la masse de moulage F.

5. Utilisation selon les revendications 1 à 4, **caractérisée en ce que** le polyorganosiloxane S est un polydiméthylsiloxane d'une viscosité de $10 . 10^{-6}$ à $100\,000 . 10^{-6}$ $m^2/s$.

6. Utilisation selon les revendications 1 à 5, **caractérisée en ce que** le copolymère greffé à élasticité de caoutchouc A contient comme caoutchouc un caoutchouc diène, un caoutchouc d'acrylate d'alkyle ou un caoutchouc EPDM.

7. Utilisation selon les revendications 1 à 6, **caractérisée en ce que** le polymère thermoplastique B contient du styrène et/ou de l'α-méthylstyrène, et de l'acrylonitrile.

**8.** Utilisation selon les revendications 1 à 7, **caractérisée en ce que** la masse de moulage résistante au choc F est une masse de moulage ABS.